(19) Europäisches Patentamt
European Patent Office
Office européen des brevets

(11) **EP 1 981 292 A1**

(12) **EUROPEAN PATENT APPLICATION**
published in accordance with Art. 158(3) EPC

(43) Date of publication:
**15.10.2008 Bulletin 2008/42**

(51) Int Cl.:
*H04Q 3/00* (2006.01)        *H04M 3/42* (2006.01)

(21) Application number: **07704766.0**

(22) Date of filing: **10.01.2007**

(86) International application number:
**PCT/ES2007/070004**

(87) International publication number:
**WO 2007/088232 (09.08.2007 Gazette 2007/32)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.01.2006 ES 200600258**

(71) Applicant: **Eagertech 21 S.L.**
**08006 Barelona (ES)**

(72) Inventors:
• **CASALS CASTAÑÉ, Josep**
**E-08006 Barcelona (ES)**
• **VERNET VIDAL, Santiago**
**E-08006 Barcelona (ES)**
• **MARTÍNEZ TERÉS, Roger**
**E-08006 Barcelona (ES)**

(54) **TELEPHONE CALL ROUTING SYSTEM**

(57) The invention relates to a telephone call routing system including means for associating calling numbers with geographical areas and means for associating geographical areas with destination numbers. The invention is **characterised in that** the calling numbers are associated with geographical areas using statistical methods with a certain minimum reliability threshold. The invention is suitable for use in the field of value-added telecommunications services, call routing and network intelligence.

AREA WHERE THE SUBSCRIBERS BELONGING TO THE SAME NUMBERING BLOCK AS THE CALLING CUSTOMER LIVE

FIG 1:

**Description**

TECHNICAL FIELD

The present invention relates to the technical field of telecommunications and more specifically to call routing, intelligent networks and value added telephone services.

STATE OF THE ART

Patent US6163597 shows a routing method for telephone calls to a virtual telephone number. In this patent, territorial boundary data and call termination data become associated to a virtual telephone number.

THE TECHNICAL PROBLEM

The drawback of the previous solution is the need of obtaining the postal addresses of all the telephone line subscribers of, for example, a whole country. This information is not easily available.

Some telephone companies offer solutions like terminating calls to virtual numbers based on the telephone district of the calling subscriber but this method usually doesn't give enough resolution.

THE TECHNICAL SOLUTION

With the system and procedure of the invention the previously mentioned problems are solved and other advantages are obtained that will be described below.

This invention relates to a telephone call routing system that comprises means to relate calling numbers to geographical areas and means to relate geographical areas to final call destinations characterized by the fact that linking of calling numbers to geographical areas is performed through statistical methods.

The geographical areas can be telephone districts, postal (ZIP) codes, provinces (regions) or countries. These areas are linked to a block of telephone numbers servicing a telephone exchange or possibly an IP (Internet Protocol) router in the case of voice over IP calls.

This routing system is characterized by the fact that for a specific numbering Block:

$$B_i = [n, n+1, n+2, \ldots n+m]$$

Weights are assigned:

$$W_i = [w_{i1}, \ldots, w_{ij}]$$

To each of the geographical Areas:

$$A_i = [a_{i1}, \ldots, a_{ij}]$$

that give service to that block. Where the weights are in proportion to the percent of telephone numbers serviced in the geographical area related to the total of numbers belonging to that numbering block. In that way, given an area '$a_{ik}$', the weight related to that area for numbering block 'i' will be:

$$w_{ik} = Q_i(a_{ik}) / m$$

where '$Q_i(a_{ik})$' represents the total quantity of numbers belonging to that block which give service to area '$a_{ik}$'.

The set of Destination numbers linked to a block '$B_i$' is:

$$D_i = [d_1, \ldots, d_j]$$

In that way, the call can be routed to the destination number linked to the geographical area of bigger weight or to the destination number obtaining a bigger total equivalent weight after adding the different weights for each area linked to the destination. The procedure consists in that for each different destination '$d_{il}$' linked to one or several geographical areas in a same numbering block 'i', the weight '$v_{il}$' is calculated which is equivalent to the addition of all the individual weights for all areas linked to the same destination.

$$v_{il} = SUM(w_{io}) \text{ given that } d_{io} = d_{il}$$

The call is finally roted to the destination with a bigger equivalent weight. This operation is called 'ponderation'.

The numbering blocks can be the whole of telephone numbers servicing a telephone exchange, numbering blocks of a 1000 numbers servicing a telephone exchange, blocks of size 'n' belonging to blocks of size 'm' servicing telephone exchanges where 'n' is smaller than 'm'. These blocks can contain consecutive or nonconsecutive numbers linked to telephone exchanges.

Given the case where a calling number belongs to a block where no reliable statistical information is available, then the size of the block is increased with adjacent blocks until enough statistical reliability is obtained. The statistical reliability is calculated as the percentage of numbers belonging to a same block or simultaneously to a same block and to a same area employed in the statistical analysis divided by the total length of the numbering block.

An advantage of the invention is that because of its statistical nature, it is not needed to know the geographical location of all the users of the virtual number that could possibly call.

BRIEF DESCRITION OF THE DRAWINGS

A series of figures are included in order to improve the understanding of what is being described. In these figures, practical implementations are schematically shown. The figures are examples of implementations and are not intended to limit the scope of the invention. In these figures:

Figure 1 is a diagram of a geographical area where the telephone subscribers belong to a same numbering block and that at the same time is divided in four postal (Zip) codes.

Figure 2 is an example of a database accessible through the Internet where extensions (telephone destination numbers) are assigned to postal (zip) codes.

Figure 3 is a table where postal (zip) codes are statistically linked according to its weight to numbering blocks belonging to a same telephone exchange.

DETAILED DESCRIPTION

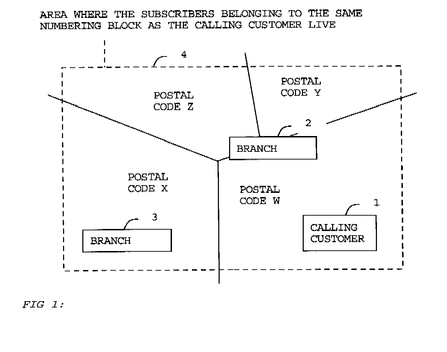

What follows is a detailed description of the preferred mode of carrying out the invention. This description is not intended to limit the scope of the invention.
As shown in FIG. 1, costumer 1 calls from a land line to a customer service number (virtual number) of a services company. The objective is to automatically route that call to the telephone number of a branch of the company (2 or 3) located as close as possible to the location of the customer.
An algorithm is implemented to solve that problem consisting in:

The postal (zip) code or codes served by each numbering block 4 related to each telephone exchange are obtained from a sample representative of the telephone subscribers database.

A list of up to 10 postal codes (FIG. 1 only shows 4 codes) is compiled for each numbering block 4 serving each telephone exchange and a weight is assigned to to each postal code that is in proportion to the percentage of subscribers served in this postal code.
When a telephone call is received, the system correlates the postal codes routing information of the services company with the postal codes information related to the block 4 that includes the telephone number of the subscriber 1. In this way, we obtain the extension of the branch (2 o 3) that has to receive the telephone call.
FIG. 1 is shown as an example where according to the statistical analysis, postal code x has a weight of 40% (i.e. 40% of the subscribers belonging to that block 4 live in the area covered by postal code X), postal code Y has a weight of 10% each, postal code W has a weight of 20% and postal code Z has a weight of 30%. Branch 2 gives service to the inhabitants of postal codes Y, W, Z and branch 3 gives service to the inhabitants living in the area of postal code X. Routing of call generated by user 1 can be implemented in 2 different ways:

-   The postal code with a bigger weight is selected. In this case the postal code with a bigger weight is X with a weight of 40%. As a result, the call is routed to branch 3.
-   The weights obtained from the postal codes belonging to a same branch are pondered. In this case branch 2 would obtain a weight of 60% (resulting from adding 10% from Y, 20% from W and 30% from Z). Branch 3 would obtain a weight of 40% and as a result the call would be routed to branch 2 because of its bigger weight.

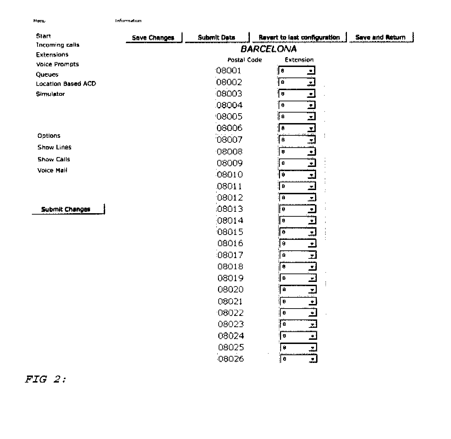

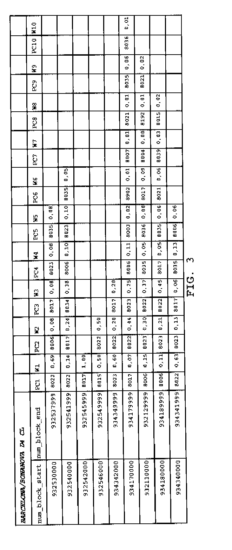

FIG. 2 shows an example of Web interface to assign extensions of a branch to different postal codes of a city. FIG. 3 shows a real case for a city area. A variable number of postal codes and associated weights are assigned to telephone numbering blocks according to the results obtained statistically.

INDUSTRIAL APPLICABILITY

A typical application would be when a customer calls a virtual number of a company with multiple branches and the call is routed automatically to the telephone number of one of the branches of that company located as closely as possible from the location of that customer.

**Claims**

1.  Telephone call routing system comprising means to associate calling telephone numbers to geographical areas; means to associate geographical areas to destination numbers; **characterized by** the fact that the association of calling numbers to geographical areas is performed through statistical methods.

2.  Telephone call routing system according to claim 1 **characterized by** the fact that the geographical areas are telephone area districts.

3.  Telephone call routing system according to claim 1 **characterized by** the fact that the geographical areas are postal codes.

4.  Telephone call routing system according to claim 1 **characterized by** the fact that the geographical areas are postal provinces.

5.  Telephone call routing system according to claim 1 **characterized by** the fact that the geographical areas are countries.

6. Telephone call routing system according to claims 1-5 **characterized by** the fact that several geographical areas are associated to a numbering block servicing a telephone exchange.

7. Telephone call routing system according to claim 6 **characterized by** the fact that said telephone exchange is a voice over IP router.

8. Telephone call routing system according to claims 6-7 **characterized by** the fact that for a specific numbering block weights are assigned to each of the geographical areas serviced by that block.

9. Telephone call routing system according to claim 8 **characterized by** the fact that these weights are in proportion to the percentage of telephone numbers serviced in that geographical area related to the total of numbers belonging to the numbering block.

10. Telephone call routing system according to claim 9 **characterized by** the fact that the percentage of telephone numbers serviced is calculated statistically.

11. Telephone call routing system according to claim 10 **characterized by** the fact that the statistical methods consist in employing a sample of telephone numbers with a known geographical location in order to obtain the proportional weights of each geographical area in each numbering block.

12. Telephone call routing system according to claims 1-11 **characterized by** the fact that the call is routed to the destination number associated to the geographical area with a bigger weight.

13. Telephone call routing system according to claims 1-11 **characterized by** the fact that the call is routed to the destination number resulting from pondering the information of the different weights for each area with the information of the destination numbers associated to each area.

14. Telephone call routing system according to claim 13 **characterized by** the fact that the ponderation consists in calculating for each different destination associated to a geographical area associated to a same numbering block, a pondered weight which is equivalent to the sum of all the individual weights for all areas associated to the same destination in that numbering block; resulting in that the call is routed to the destination that obtains a bigger pondered weight.

15. Telephone call routing system according to claims 1-14 **characterized by** the fact that said numbering blocks are the set of all telephone numbers serviced by a telephone exchange.

16. Telephone call routing system according to claims 1-14 **characterized by** the fact that said numbering blocks are sets of 1000 numbers serviced by telephone exchanges.

17. Telephone call routing system according to claims 1-14 **characterized by** the fact that said numbering blocks are sub-blocks of size n belonging to blocks of m numbers serviced by telephone exchanges given that n is smaller than m.

18. Telephone call routing system according to claims 15-17 **characterized by** the fact that said numbering blocks comprise consecutive numbers serviced by a telephone exchange.

19. Telephone call routing system according to claims 15-17 **characterized by** the fact that said numbering blocks comprise non-consecutive numbers.

20. Telephone call routing system according to claims 1-19 **characterized by** the fact that if the calling number belongs to a numbering block of which no reliable statistical information is available, then the size of the block is enlarged encompassing contiguous blocks until enough statistical reliability is obtained.

21. Telephone call routing system according to claim 20 **characterized by** the fact that a minimum threshold of reliability is established.

22. Telephone call routing system according to claims 20-21 **characterized by** the fact that statistical reliability is calculated as the percentage of numbers belonging to a same numbering block used in the statistical analysis in proportion to the total length of numbers belonging to that block.

23. Telephone call routing system according to claims 20-21 **characterized by** the fact that statistical reliability is calculated as the percentage of numbers belonging to a same numbering block and to a same area used in the statistical analysis in proportion to the total length of numbers belonging to that block.

AREA WHERE THE SUBSCRIBERS BELONGING TO THE SAME
NUMBERING BLOCK AS THE CALLING CUSTOMER LIVE

4

POSTAL
CODE Z

POSTAL
CODE Y

2

BRANCH

POSTAL
CODE X

POSTAL
CODE W

1

3

CALLING
CUSTOMER

BRANCH

*FIG 1:*

5

Menu | Information

| Start | Save Changes | Submit Data | Revert to last configuration | Save and Return |

Incoming calls
Extensions
Voice Prompts
Queues
Location Based ACD
Simulator

*BARCELONA*

| Postal Code | Extension |
| --- | --- |
| 08001 | 8 ▾ |
| 08002 | 8 ▾ |
| 08003 | 8 ▾ |
| 08004 | 8 ▾ |
| 08005 | 8 ▾ |
| 08006 | 8 ▾ |
| 08007 | 8 ▾ |
| 08008 | 8 ▾ |
| 08009 | 8 ▾ |
| 08010 | 8 ▾ |
| 08011 | 8 ▾ |
| 08012 | 8 ▾ |
| 08013 | 8 ▾ |
| 08014 | 8 ▾ |
| 08015 | 8 ▾ |
| 08016 | 8 ▾ |
| 08017 | 8 ▾ |
| 08018 | 8 ▾ |
| 08019 | 8 ▾ |
| 08020 | 8 ▾ |
| 08021 | 8 ▾ |
| 08022 | 8 ▾ |
| 08023 | 8 ▾ |
| 08024 | 8 ▾ |
| 08025 | 8 ▾ |
| 08026 | 8 ▾ |

Options
Show Lines
Show Calls
Voice Mail

| Submit Changes |

*FIG 2:*

**BARCELONA/BONANOVA D4 CL**

| num_block_start | num_block_end | PC1 | W1 | PC2 | W2 | PC3 | W3 | PC4 | W4 | PC5 | W5 | PC6 | W6 | PC7 | W7 | PC8 | W8 | PC9 | W9 | PC10 | W10 |
|---|---|---|---|---|---|---|---|---|---|---|---|---|---|---|---|---|---|---|---|---|---|
| 932530000 | 932537999 | 8022 | 0,69 | 8006 | 0,08 | 8017 | 0,08 | 8023 | 0,08 | 8035 | 0,08 | | | | | | | | | | |
| 932540000 | 932541999 | 8022 | 0,14 | 8017 | 0,24 | 8034 | 0,38 | 8006 | 0,10 | 8023 | 0,10 | 8035 | 0,05 | | | | | | | | |
| 932542000 | 932545999 | 8017 | 1,00 | | | | | | | | | | | | | | | | | | |
| 932546000 | 932549999 | 8015 | 0,50 | 8022 | 0,50 | | | | | | | | | | | | | | | | |
| 934342000 | 934343999 | 8023 | 0,60 | 8022 | 0,20 | 8017 | 0,20 | | | | | | | | | | | | | | |
| 934170000 | 934179999 | 8017 | 0,07 | 8022 | 0,44 | 8023 | 0,25 | 8006 | 0,11 | 8003 | 0,02 | 8902 | 0,01 | 8007 | 0,01 | 8021 | 0,01 | 8035 | 0,06 | 8036 | 0,01 |
| 932110000 | 932129999 | 8006 | 0,15 | 8023 | 0,30 | 8022 | 0,37 | 8035 | 0,05 | 8036 | 0,00 | 8017 | 0,09 | 8004 | 0,00 | 8192 | 0,01 | 8021 | 0,02 | | |
| 934180000 | 934189999 | 8006 | 0,11 | 8023 | 0,21 | 8022 | 0,45 | 8017 | 0,05 | 8035 | 0,06 | 8021 | 0,06 | 8039 | 0,03 | 8015 | 0,02 | | | | |
| 934340000 | 934341999 | 8022 | 0,63 | 8023 | 0,13 | 8017 | 0,06 | 8035 | 0,13 | 8006 | 0,06 | | | | | | | | | | |

FIG. 3

**EP 1 981 292 A1**

## INTERNATIONAL SEARCH REPORT

| International application No. |
| --- |
| PCT/ ES 2007/070004 |

### A. CLASSIFICATION OF SUBJECT MATTER

see extra sheet

According to International Patent Classification (IPC) or to both national classification and IPC

### B. FIELDS SEARCHED

Minimum documentation searched (classification system followed by classification symbols)

H04Q 3/00, H04M 3/42

Documentation searched other than minimum documentation to the extent that such documents are included in the fields searched

Electronic data base consulted during the international search (name of data base and, where practicable, search terms used)

CIBEPAT,EPODOC: routing, call, statis+, range, group, assign+, associ+, match+, calcul+, forwarding, caller, identification, geographic+, location, subscriber, area, zone, region, zip, correlat+, digit, code

### C. DOCUMENTS CONSIDERED TO BE RELEVANT

| Category* | Citation of document, with indication, where appropriate, of the relevant passages | Relevant to claim No. |
| --- | --- | --- |
| X | US 6163597 A (BELL ATLANTIC NETWORK SERVICES) 19.12.2000 Abstract. | 1-23 |
| X | US 2004190706 A1 (SBC TECHNOLOGY RESOURCES) 30.09.2004 Abstract. | 1-23 |
| X | US 6097802 A (SBC TECHNOLOGY RESOURCES) 01.08.2000 Abstract. | 1-23 |
| X | US 5982868 A (MUREX SECURITIES) 09.11.1999 the whole the document. | 1-23 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
| --- | --- |
| 14.May.2007     (14.05.2007) | (23/05/2007) |
| Name and mailing address of the ISA/ O.E.P.M. Paseo de la Castellana, 75 28071 Madrid, España. Facsimile No. 34 91 3495304 | Authorized officer A. Catalina Gallego Telephone No. +34 91 349 85 51 |

Form PCT/ISA/210 (second sheet) (April 2007)

8

| INTERNATIONAL SEARCH REPORT |  | International application No. |  |
|---|---|---|---|
| Information on patent family members |  | PCT/ ES 2007/070004 |  |

| Patent document cited in the search report | Publication date | Patent family member(s) | Publication date |
|---|---|---|---|
| US 2004190706 | 30.09.2004 | US 6097802 | 01.08.2000 |
|  |  | US 2002057781 | 16.05.2002 |
|  |  | US 6542598 | 01.04.2003 |
|  |  | US 6411699 | 25.06.2002 |
|  |  | US 2003112954 | 19.06.2003 |
|  |  | US 6697477 | 24.02.2004 |
|  |  | US 6980636 | 27.12.2005 |
|  |  | US 2006013374 | 19.01.2006 |
| US 6097802 | 01.08.2000 | US 2002057781 | 16.05.2002 |
|  |  | US 6542598 | 01.04.2003 |
|  |  | US 6411699 | 25.06.2002 |
|  |  | US 2003112954 | 19.06.2003 |
|  |  | US 6697477 | 24.02.2004 |
|  |  | US 2004190706 | 30.09.2004 |
|  |  | US 6980636 | 27.12.2005 |
|  |  | US 2006013374 | 19.01.2006 |
| US 5982868 | 09.11.1999 | US 5506897 | 09.04.1996 |
|  |  | US 5848131 | 08.12.1998 |
|  |  | US 5907608 | 25.05.1999 |
|  |  | US 5910982 | 08.06.1999 |
|  |  | US 5956397 | 21.09.1999 |
|  |  | US 6091810 | 18.07.2000 |
|  |  | US 6385312 | 07.05.2002 |
|  |  | US 2002076029 | 20.06.2002 |
|  |  | US 6570975 | 27.05.2003 |
|  |  | US 2002106069 | 08.08.2002 |
|  |  | US 6608892 | 19.08.2003 |
|  |  | US 2003228009 | 11.12.2003 |
|  |  | US 7136474 | 14.11.2006 |
|  |  | US 2006008067 | 12.01.2006 |
|  |  | US 7203300 | 10.04.2007 |

Form PCT/ISA/210 (patent family annex) (April 2007)

| INTERNATIONAL SEARCH REPORT | International application No. |
| --- | --- |
| | PCT/ ES 2007/070004 |

CLASSIFICATION OF SUBJECT MATTER

*H04Q 3/00* (2006.01)
*H04M 3/42* (2006.01)

Form PCT/ISA/210 (extra sheeet) (April 2007)

**REFERENCES CITED IN THE DESCRIPTION**

**Patent documents cited in the description**

- US 6163597 A